# EUROPEAN PATENT APPLICATION

(11) **EP 3 958 201 A1**
(43) Date of publication of application: **23.02.2022**
(21) Application number: 20814407.1
(22) Date of filing: 22.05.2020
(51) Int. Cl.: G06Q 20/32, G06Q 20/38

(54) **ELECTRONIC DEVICE, METHOD AND COMPUTER PROGRAM FOR PAYMENT USING VEHICLE DIGITAL KEY**

(30) Priority: 24.05.2019 KR 20190061071
(71) Applicant: ParkingCloud Co., Ltd., Seoul Yeongdeungpo-gu 07276 (KR); Shin, Sang Yong, Seoul Gangseo-gu 07548 (KR)
(72) Inventor: LEE, Hwa Jin, Seoul 06000 (KR); SHIN, Sang Yong, Seoul 07548 (KR)
(74) Representative: Forresters IP LLP
(86) International application number: PCT/KR2020/006679
(87) International publication number: WO 2020/242140

(57) **Abstract**

Various embodiments of the present disclosure relate to a method performed on an electronic device to provide a payment service for vehicle and serve as a digital key, the electronic device and a computer program stored in the electronic device. According to an embodiment, a method performed by an electronic device to provide a payment service for vehicle and serve as a digital key comprises: establishing a communication connection with at least one communication circuit included as a digital key in a vehicle; and providing the payment service in response to the establishment of the communication connection with the vehicle, and the providing the payment service includes: checking vehicle information of the vehicle; receiving payment information of the vehicle from a server using the checked vehicle information; and processing payment based on the received payment information. There can be various other embodiments.

## Description

### TECHNICAL FIELD

The present disclosure relates to a payment method using a vehicle digital key, an electronic device and a computer program therefor.

### BACKGROUND

Unless otherwise indicated herein, the materials described in this section are not prior art to the claims in this application and are not admitted as prior art by inclusion in this section.

A smart key system that enables a user holding a vehicle smart key (remote controller) to unlock and lock a vehicle door or start an engine without additional insertion of a key or manipulation has already been applied to many vehicles. The smart key is small in size and easy to carry but has a disadvantage in that it is impossible to drive the vehicle if the user loses it or leaves it elsewhere.

In recent years, smartphones that can provide various services by executing applications have been widely spread to the general public, and in line with this, the automobile manufacturing industry has also developed "smartphone-based digital keys" for which a smartphone application is executed to use the user's smartphone as a vehicle digital key. When using the digital key, the user can access, start, drive and control the vehicle with only the smartphone, even if the user does not have a smart key, and the user can share the authority to operate the vehicle with other users.

### DISCLOSURE OF THE INVENTION

According to a conventional method for payment of a vehicle-related fee, such as a parking fee, a user has to pay in advance at a payment station or has to pay directly at a barrier gate when exiting from a parking lot, which causes inconvenience to the user. The present disclosure is to eliminate such inconvenience and suggests an electronic device (e.g., a smart phone), a method and a computer program by which a user of a vehicle to which a smart phone-based digital key is applied can pay a parking fee using an application.

In an embodiment of the present disclosure, a method performed by an electronic device to provide a payment service for vehicle and serve as a digital key is described. According to the embodiment, the method may comprise: establishing a communication connection with at least one communication circuit included as a digital key in a vehicle; and providing the payment service in response to the establishment of the communication connection with the vehicle, and the providing the payment service may include: checking vehicle information of the vehicle; receiving payment information of the vehicle from a server using the checked vehicle information; and processing payment based on the received payment information.

In an embodiment, the communication connection between the electronic device and the vehicle may be established by at least one of Near Field Communication (NFC) using an antenna installed at a door of the vehicle, beacon or RFID.

In an embodiment, the communication connection between the electronic device and the vehicle may be established by at least one of Wi-Fi, Bluetooth or a manner using a communication network provided by a network provider.

In an embodiment, the providing the payment service may be initiated in response to transmission of a signal to unlock and lock a door of the vehicle or a signal to cause an engine of the vehicle to start through the connection with the vehicle.

In an embodiment, the method may further include operating in a payment standby mode when it is determined that the vehicle is located within a specific area for a predetermined time or longer.

In an embodiment, the providing the payment service may include providing a push notification in response to the connection with the vehicle and may be initiated according to a user's input in response to the push notification.

In an embodiment, the method may further include transmitting a signal to notify the server of payment completion when the payment is processed.

In an embodiment, the method may further include acquiring authority to detect the connection with the vehicle or acquire the vehicle information.

In an embodiment of the present disclosure, an electronic device to provide a payment service for vehicle and serve as a digital key is described. According to the embodiment, the electronic device includes: at least one communication circuit capable of communicating with a vehicle or at least one server; a processor operatively connected to the communication circuit; and a memory operatively connected to the processor, and the memory may store instructions, when executed, to cause the processor: to establish a communication connection with the at least one communication circuit as a digital key; to provide the payment service in response to the establishment of the communication connection with the vehicle; to check vehicle information of the vehicle in order to provide the payment service; to receive payment information of the vehicle from the server using the checked vehicle information; and to process payment based on the received payment information.

In an embodiment, the communication connection between the electronic device and the vehicle may be established by at least one of Near Field Communication (NFC) using an antenna installed at a door of the vehicle, beacon or RFID.

In an embodiment, the communication connection between the electronic device and the vehicle may be established by at least one of Wi-Fi, Bluetooth or a manner using a communication network provided by a network provider.

In an embodiment, the memory may further store instructions, when executed, to cause the processor: to provide the payment service in response to transmission of a signal to unlock and lock a door of the vehicle or a signal to cause an engine of the vehicle to start through the connection with the vehicle.

In an embodiment, the memory may further store instructions, when executed, to cause the processor: to operate in a payment standby mode when it is determined that the vehicle is located within a specific area for a predetermined time or longer.

In an embodiment, the memory may further store instructions, when executed, to cause the processor: to provide a push notification in response to the connection with the vehicle and provide the payment service according to a user's input in response to the push notification.

In an embodiment, the memory may further store instructions, when executed, to cause the processor: to transmit a signal to notify the server of payment completion when the payment is processed.

In an embodiment, the memory may further store instructions, when executed, to cause the processor: to acquire authority to detect the connection with the vehicle or acquire the vehicle information.

In an embodiment of the present disclosure, a computer program that is stored in a storage medium of an electronic device to provide a vehicle user with a payment service for vehicle and serve as a digital key and is executed by the electronic device is described. The computer program may include instructions: to establish a communication connection with at least one communication circuit included as a digital key in a vehicle; to provide the payment service in response to the establishment of the communication connection with the vehicle; to check vehicle information of the vehicle in order to provide the payment service; to receive payment information of the vehicle from a server using the checked vehicle information; and to process payment based on the received payment information.

According to an embodiment of the present disclosure, there is provided a method to which a digital key is applied and which is performed in a vehicle to provide a payment service for vehicle. This method comprises: at least one communication circuit capable of communicating with an electronic device serving as a digital key or at least one server; a processor operatively connected to the communication circuit; and a memory operatively connected to the processor, and the memory, when executed, causes the processor to establish a communication connection with the electronic device and the at least one communication circuit as a digital key; to request payment information from the at least one server when a payment initiation condition is checked; to provide an interface for payment based on the payment information received from the at least one server; and to transmit, to the at least one server, the result of a user's input to the interface.

The foregoing summary is illustrative only and is not intended to be in any way limiting. In addition to the illustrative embodiments and features described above, further embodiments and features will become apparent by reference to the drawings and the following detailed description.

### BRIEF DESCRIPTION OF THE DRAWINGS

The foregoing and other features of the present disclosure will be described in detail with reference to the accompanying drawings. Understanding that these drawings depict only several examples in accordance with the disclosure and are, therefore, not to be considered limiting of its scope, the disclosure will be described with additional specificity and detail through use of the accompanying drawings, in which:
**FIG. 1** is a diagram schematically illustrating an interaction between an electronic device serving as a digital key and a vehicle, in accordance with an embodiment of the present disclosure;
**FIG. 2** illustrates a usage example where the electronic device serving as a digital key interacts with the vehicle through a communication circuit installed at a door of the vehicle, in accordance with an embodiment of the present disclosure;
**FIG. 3** is a flowchart for describing that an electronic device serving as a digital key provides an electronic payment service, in accordance with an embodiment of the present disclosure;
**FIG. 4** is a flowchart for describing that an electronic device serving as a digital key provides an electronic payment service, in accordance with another embodiment of the present disclosure;
**FIG. 5** is a flowchart for describing that an electronic device serving as a digital key provides an electronic payment service, in accordance with yet another embodiment of the present disclosure.
**FIG. 6** is a detailed flowchart for an electronic payment service provided by an electronic device serving as a digital key, in accordance with an embodiment of the present disclosure.
**FIG. 7** is a detailed flowchart for an electronic payment service provided by a vehicle including a digital key, in accordance with an embodiment of the present disclosure;
**FIG. 8** illustrates an example where a vehicle including a digital key provides an electronic payment service, in accordance with an embodiment of the present disclosure; and
**FIG. 9** illustrates a computer program product that can be used to provide an electronic payment service by an electronic device serving as a digital key, in accordance an embodiment of the present disclosure.

### BEST MODE FOR CARRYING OUT THE INVENTION

Hereafter, embodiments and examples will be described in detail with reference to the accompanying drawings so that the present disclosure may be readily implemented by those skilled in the art. However, it is to be noted that the present disclosure is not limited to the embodiments and examples but can be embodied in various other ways.

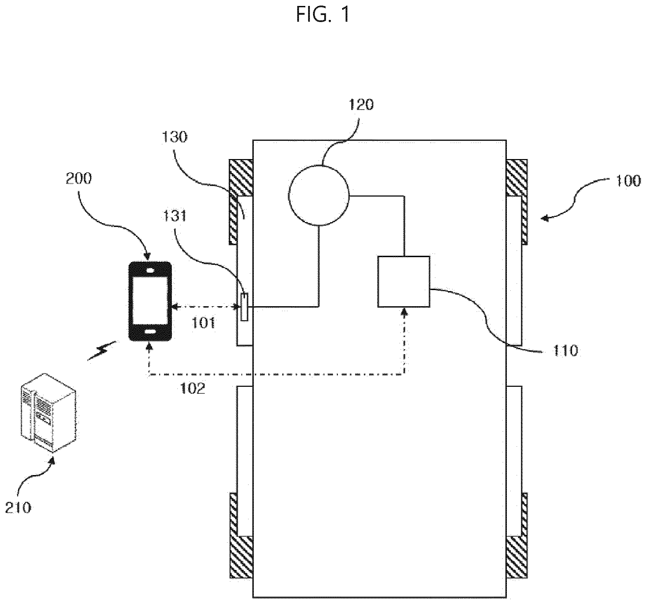

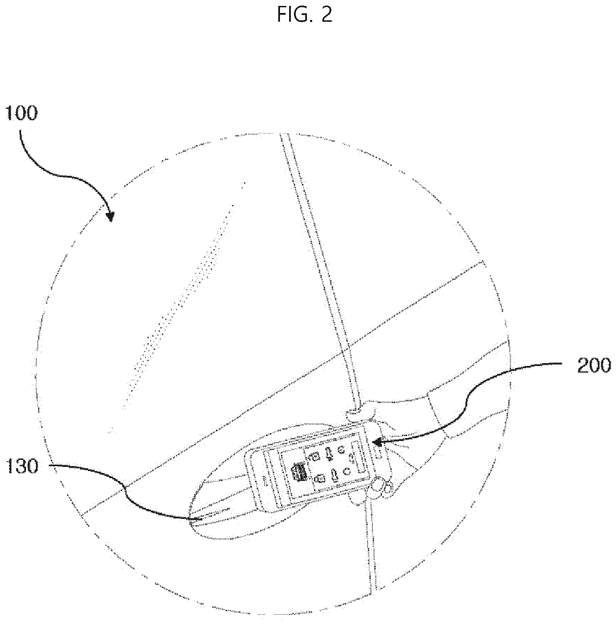

**FIG. 1** is a diagram schematically illustrating an interaction between an electronic device serving as a digital key and a vehicle, in accordance with an embodiment of the present disclosure, and **FIG. 2** illustrates a usage example where the electronic device serving as a digital key interacts with the vehicle through a communication circuit installed at a door of the vehicle, in accordance with an embodiment of the present disclosure.

Referring to **FIG. 1****,** a vehicle 100 may include a head unit 110 and a digital key unit 120. Head unit 110 is configured to control a vehicle, and may be operatively connected to digital key unit 120 provided in vehicle 100. According to an embodiment, the connection between head unit 110 and digital key unit 120 is established by vehicle communication technology, for example, a standard communication system such as Local Interconnect Network (LIN), Controller Area Network (CAN) and FlexRay. In another embodiment, digital key unit 120 may be a component included in head unit 110.

A portable electronic device 200 held by a vehicle user may serve as a digital key for vehicle 100. To this end, electronic device 200 may be connected to vehicle 100 (e.g., head unit 110 or digital key unit 120) through wireless communication. Also, electronic device 200 may be connected to at least one server 210 through wireless communication to provide a payment service.

Wireless communication may be established through at least one of Near Field Communication (NFC), beacon, RFID, Wi-Fi, Bluetooth and a wireless communication manner using a communication network provided by a network provider. Vehicle 100 may be equipped with a communication module (not shown) for such wireless communication. The communication module operates independently of head unit 110 of vehicle 100 and may include one or more communication processors that support direct (e.g., wired) communication or wireless communication. The communication module may include a wireless communication module (e.g., a cellular communication module, a short-range wireless communication module or a global navigation satellite system (GNSS) communication module) or a wired communication module (e.g., a local area network (LAN) communication module or a power line communication module). A corresponding one of these communication modules may communicate with electronic device 300 via a network (e.g., a long-range network such as a cellular network, the Internet or a computer network (e.g., LAN or WAN)) or a short-range network (e.g., a short-range communication network such as Bluetooth, WiFi direct or infrared data association (IrDA)). These various types of communication modules may be implemented as a single component (e.g., a single chip) or may be implemented as a plurality of components (e.g., a plurality of chips) separate from each other.

According to an embodiment, a short-range communication circuit 131 may be installed at a door 130 of vehicle 100. Specifically, short-range communication circuit 131 may be installed at a doorknob of door 130. Although short-range communication circuit 131 is illustrated as being installed at one of the doors of vehicle 100, it may be installed at various locations of vehicle 100, such as a plurality of doors or a trunk door. Short-range communication circuit 131 may be, for example, an NFC antenna.

Digital key unit 120 may establish a wireless communication 101 with electronic device 200 through short-range communication circuit 131. Electronic device 200 and vehicle 100 may exchange various signals and data so that electronic device 200 can serve as a digital key through first wireless communication 101.

**FIG. 2** illustrates a usage example where the vehicle user brings electronic device 200 into contact with the doorknob of door 130 to establish wireless communication with vehicle 100 (e.g., head unit 110 or digital key unit 120) using a short-range communication circuit installed at the doorknob of door 130. Digital key unit 120 may be configured to determine whether electronic device 200 is suitable as a digital key based on established first wireless communication 101, i.e., whether electronic device 200 has the authority to control vehicle 100, and open or lock door 130.

Referring back to **FIG. 1****,** vehicle 100 may establish a second wireless communication 102 with electronic device 200 through another communication manner (e.g., Wi-Fi, cellular network, Bluetooth, etc.). Electronic device 200 and vehicle 100 may exchange various signals and data so that electronic device 200 can serve as a digital key through second wireless communication 102.

For example, electronic device 200 connected to vehicle 100 through second wireless communication 102 may determine whether electronic device 200 is suitable as a digital key, *i.e.,* electronic device 200 has the authority to control vehicle 100, and if electronic device 200 has the authority, electronic device 200 can unlock and lock door 130 as well as control starting and driving of the vehicle.

According to an embodiment, an application that enables electronic device 200 to serve as a digital key may be installed on electronic device 200. For example, an application provided by a manufacturer of vehicle 100 may be installed as an application that enables electronic device 200 to serve as a digital key. Referring to **FIG. 2****,** the vehicle user can perform various controls for vehicle 100 such as unlocking and locking door 130, operating and stopping a vehicle horn, moving forwards or backwards to park vehicle 100 by manipulating the application that enables electronic device 200 to serve as a digital key (for example, touch input on the icon) and is executed on electronic device 200.

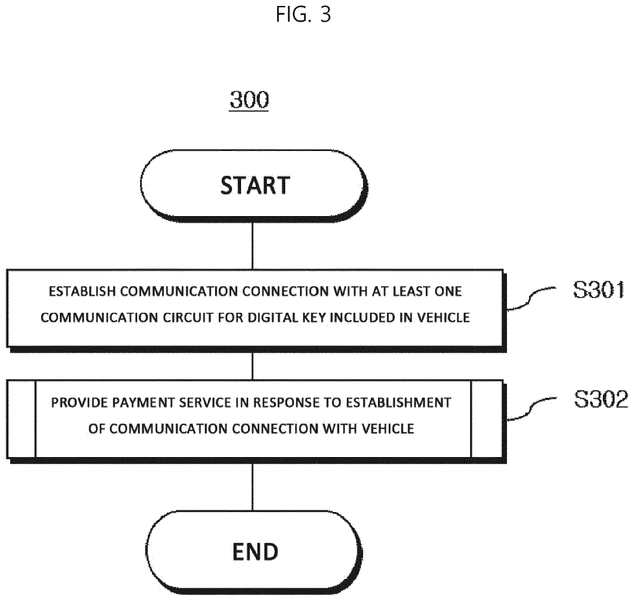

**FIG. 3** is a flowchart of a process 300 in which an electronic device serving as a digital key provides an electronic payment service, in accordance with an embodiment of the present disclosure.

Process 300 begins at a block S301. At block S301, electronic device 200 may establish wireless communication with at least one communication circuit for a digital key included in vehicle 100 (or digital key unit 120). Then, at a block S302, electronic device 200 may provide a payment service in response to the establishment of the wireless communication between electronic device 200 and vehicle 100. For example, electronic device 200 may execute a separate application for the payment service or a web browser application to display a web page for providing the payment service. As another example, the application that enables electronic device 200 to serve as a digital key may also provide the payment service.

When electronic device 200 establishes wireless communication with vehicle 100, electronic device 200 would be served as a digital key. This means that the vehicle user intends to drive vehicle 100 which has been parked. Therefore, when the payment service is provided in response to the establishment of the wireless communication between electronic device 200 and vehicle 100, the vehicle user would be provided with convenience to directly pay a payment fee incurred during the period in which vehicle 100 was parked using electronic device 200.

The payment fee may include, for example, a parking fee, a gas charging fee (cost of charging a battery of an electric vehicle if vehicle 100 is an electric vehicle), a car wash fee, and the like. The vehicle user who receives the payment service of the present disclosure does not have to use a payment station for paying a payment fee nor to pay a payment at a barrier gate when exiting from a parking lot.

The establishment of the wireless communication (hereinafter, referred to as payment trigger wireless communication) between electronic device 200 and vehicle 100 that enables electronic device 200 to provide the payment service may be the connection of wireless communication itself or a signal exchanged to perform a specific function.

According to an embodiment, the payment trigger wireless communication may be first wireless communication (101 in **FIG. 1**) established by electronic device 200 with a communication circuit installed at door 130 of vehicle 100. In another embodiment, the payment trigger wireless communication may be at least one signal exchanged to confirm, from vehicle 100, whether electronic device 200 that has established first wireless communication 101 with vehicle 100 has the authority to control vehicle 100. In yet another embodiment, the payment trigger wireless communication may be at least one signal exchanged between vehicle 100 and electronic device 200 that has established first wireless communication 101 with vehicle 100 to unlock and lock door 130 of vehicle 100.

In another embodiment, the payment trigger wireless communication may be second wireless communication (102 in **FIG. 1**) established between electronic device 200 and vehicle 100. In yet another embodiment, the payment trigger wireless communication may be at least one signal exchanged to confirm, from vehicle 100, whether electronic device 200 that has established second wireless communication 102 with vehicle 100 has the authority to control vehicle 100. For example, electronic device 200 may transmit a signal including an authentication key to vehicle 100, and vehicle 100 may check whether the authentication key received from electronic device 200 is valid and then transmit a signal including the check result to electronic device 200. All or at least one of these signals may be defined as payment trigger wireless communication. In still another embodiment, the payment trigger wireless communication may be a control signal exchanged between vehicle 100 and electronic device 200 that has established first wireless communication 101 with vehicle 100 to control vehicle 100. The control signal to control vehicle 100 includes various control signals to start an engine of vehicle 100, shift the gear of vehicle 100 and the like.

In still another embodiment, the payment trigger wireless communication may be second wireless communication 102 established after first wireless communication 101 is established between electronic device 200 and vehicle 100. For example, after first wireless communication 101 through which electronic device 200 is connected to the communication circuit installed at door 130 of vehicle 100 is established, each of vehicle 100 or electronic device 200 may request establishment of second wireless communication 102 from each other, and second wireless communication 102 may be established based on this. Likewise, the payment trigger wireless communication may be at least one of signals exchanged through second wireless communication 102 that is established after first wireless communication 101 is established, as described above.

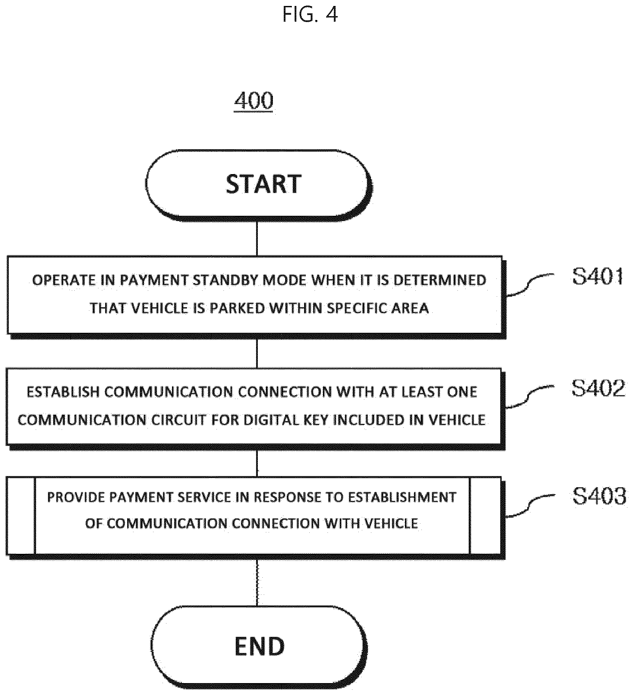

**FIG. 4** is a flowchart of a process 400 in which an electronic device serving as a digital key provides an electronic payment service, in accordance with another embodiment of the present disclosure.

Process 400 begins at a block S401. At block S401, electronic device 200 may determine that vehicle 100 is parked within a specific area where a payment fee is incurred and may operate in a payment standby mode. Then, at a block S402, electronic device 200 operating in the payment standby mode may detect the establishment of wireless communication with vehicle 100 (or digital key unit 120). Thereafter, at a block S403, electronic device 200 may provide a payment service in response to the establishment of the wireless communication between electronic device 200 and vehicle 100. For example, electronic device 200 may execute an application for the payment service or a web browser application to display a web page for providing the payment service. That is, in the present embodiment, the payment service is provided to the vehicle user only when vehicle 100 is parked within a specific area where a payment fee is incurred, and, thus, the vehicle user does not have to use unnecessary payment services.

At block S401, electronic device 200 may determine in various ways whether vehicle 100 is parked within a specific area, such as a parking lot or a gas station, where a payment fee is incurred.

Electronic device 200 may determine whether vehicle 100 is parked within a specific area where a payment fee is incurred depending on a location condition and/or a time condition. According to an embodiment, when electronic device 200 checks its own location using at least one of CPS, WPS, and GPS and determines that electronic device 200 is located within a specific area where a payment fee is incurred for a predetermined time or longer, electronic device 200 may operate in the payment standby mode.

According to another embodiment, when electronic device 200 receives, from vehicle 100, information about parking location and parking time through wireless communication and determines based on the information that vehicle 100 has been parked within a specific area for a predetermined time or longer, electronic device 200 may operate in the payment standby mode.

According to yet another embodiment, electronic device 200 may operate in the payment standby mode in response to a signal to operate in the payment standby mode from vehicle 100 or a separate server (for example, 210 in **FIG. 1**). The signal to operate in the payment standby mode may be transmitted to electronic device 200 by vehicle 100 or server 210 after vehicle 100 or server 210 directly determines that vehicle 100 is parked within a specific area where a payment fee is incurred.

Herein, when electronic device 200 starts operating in the payment standby mode or operates in the payment standby mode, the payment service application would be installed on electronic device 200 executed in a background mode on electronic device 200.

The embodiments are not limited thereto, and location information and/or time information of vehicle 100 or electronic device 200 may be acquired by various subjects, and various subjects may determine that vehicle 100 is parked within a specific area where a payment fee is incurred.

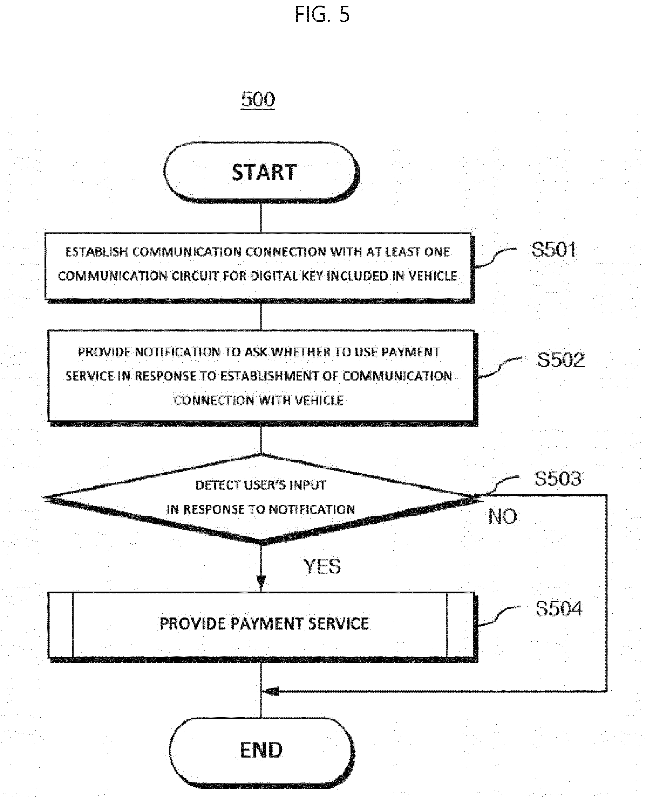

**FIG. 5** is a flowchart of a process 500 in which an electronic device serving as a digital key provides an electronic payment service, in accordance with yet another embodiment of the present disclosure.

Process 500 begins at a block S501. At block S501, electronic device 200 may establish wireless communication with vehicle 100 (or digital key unit 120). Then, at a block S502, electronic device 200 may provide a notification asking the user whether to use the payment service in response to the establishment of the wireless communication between electronic device 200 and vehicle 100. The notification may be a push notification displayed on electronic device 200. At a next block S503, electronic device 200 may detect the user's input in response to the notification. When electronic device 200 detects the user's input indicating that the user will not use the payment service, process 500 is ended. When electronic device 200 detects the user's input indicating that the user will use the payment service, process 500 continues to a next block S504. At block S503, electronic device 200 may provide the payment service. For example, electronic device 200 may execute an application for the payment service or a web browser application to display a web page for providing the payment service. That is, in the present embodiment, the vehicle user does not have to use unnecessary payment services by directly asking the vehicle user whether to use the payment service.

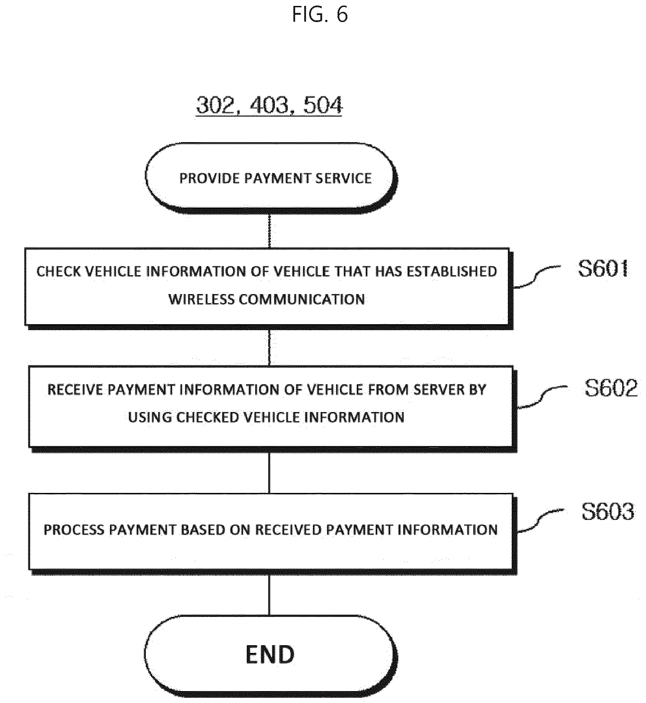

**FIG. 6** is a detailed flowchart for an electronic payment service provided by an electronic device serving as a digital key, in accordance with an embodiment of the present disclosure. In other words, **FIG. 6** is a detailed flowchart for blocks S302, S403, and S504 in **FIG. 3** to **FIG. 5** where electronic device 200 provides the payment service. A process 600 performed by electronic device 200 as described below may be performed in a separate application or web browser for providing the payment service. Process 600 may also be performed in the application that enables electronic device 200 to serve as a digital key without executing a separate application.

Process 600 begins at a block S601. At block S601, electronic device 200 may check vehicle information of vehicle 100 that has established wireless communication. The vehicle information may include a vehicle license number and may further include a unique identification number, vehicle type, color, displacement and the like.

According to an embodiment, electronic device 200 may check vehicle information previously stored in a memory of electronic device 200. Electronic device 200 may store vehicle information in advance in order to serve as a digital key of vehicle 100. Electronic device 200 may need the authority to access the previously stored vehicle information in order to check vehicle information. Electronic device 200 may acquire the authority to access the vehicle information in advance or may be requested to acquire the authority whenever accessing the vehicle information.

According to another embodiment, electronic device 200 may receive the vehicle information from vehicle 100. Electronic device 200 may request the vehicle information through the wireless communication with vehicle 100 and thus acquire the vehicle information from vehicle 100.

Then, at a block S602, electronic device 200 may receive payment information of vehicle 100 from a server (e.g., 210 in **FIG. 1**) using the checked vehicle information. Herein, server 210 may be an application server that overall manages the payment service for vehicle 100, a standalone server, a web server and any computing device having data transmission/reception functions, data identification functions and data processing functions. Server 210 is used as a term including at least one of a local server installed in a specific area where vehicle 100 enters and an integrated management server connected to a plurality of local servers.

Specifically, electronic device 200 may transmit the checked vehicle information to server 210 to request payment information. Server 210 may generate payment information based on the vehicle information and transmit the payment information to electronic device 200 when there is a payment fee to be paid by the vehicle user. For example, the payment fee may include a parking fee, a gas charging fee or an electric vehicle charging fee. When the payment fee is a parking fee, server 210 may determine the parking fee based on a time when a request for payment information was received from electronic device 200.

When there is no payment fee to be paid by the vehicle user, server 210 may transmit, to electronic device 200, payment information indicating that there is no payment fee when the parking fee has already been paid at a payment station. In this case, electronic device 200 that received the payment information indicating that there is no payment fee may end process 600 for providing the payment service.

In yet another embodiment, when receiving payment information indicating that there is a payment fee, electronic device 200 may provide a notification asking the user whether to use the payment service. The notification may be a push notification displayed on electronic device 200. When electronic device 200 detects the user's input indicating that the user will not use the payment service, process 600 ends. When electronic device 200 detects the user's input indicating that the user will use the payment service, process 600 continues to a next block S603. In this case, blocks S601 and S602 performed by electronic device 200 may be performed by executing the application for providing the payment service in a background mode.

Then, at block S603, electronic device 200 may process payment based on the payment information received from server 210. Electronic device 200 may provide the payment information, such as a payment fee and payment details, to the user and check the user's intention to make payment. For example, electronic device 200 displays a payment fee and payment details on electronic device 200, checks the user's intention to make payment and provides a user interface (Ul) through which the user can determine a payment manner. If the user has an intention to make payment and determines a payment manner, electronic device 200 may request server 210 to process payment and complete providing the payment service. Also, various payment processing methods that can be performed by already known electronic devices may be used.

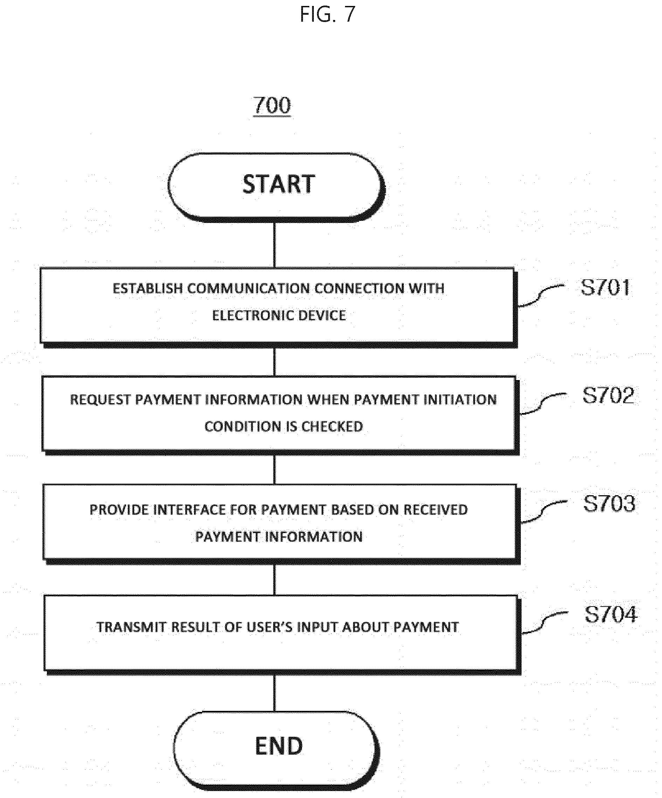

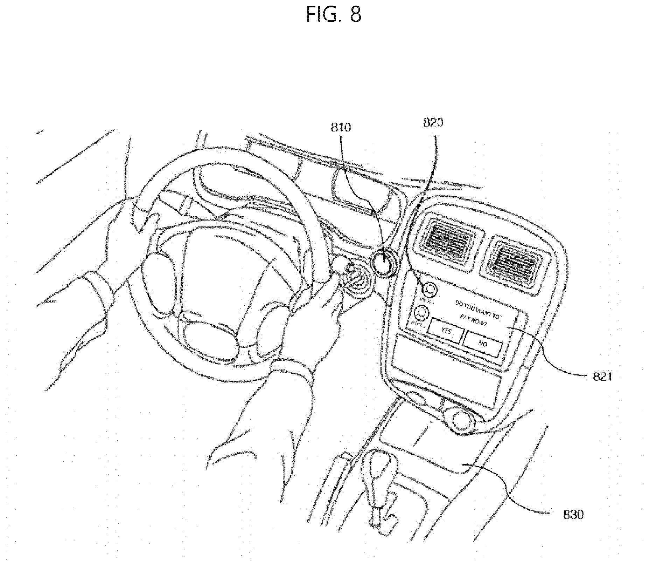

**FIG. 7** is a detailed flowchart for an electronic payment service provided by a vehicle including a digital key, in accordance with an embodiment of the present disclosure. **FIG. 8** illustrates an example where a vehicle including a digital key provides an electronic payment service, in accordance with an embodiment of the present disclosure. An embodiment where a vehicle to which a digital key is applied provides an electronic payment service will be described with reference to **FIG. 7** to **FIG. 8****.**

A process 700 begins at a block S701. At block S701, vehicle 100 may establish wireless communication with electronic device 200 using at least one communication circuit for a digital key included in vehicle 100 (or digital key unit 120). When electronic device 200 establishes wireless communication with vehicle 100, electronic device 200 would be served as a digital key. This means that the vehicle user intends to drive vehicle 100 which has been parked. Therefore, when the payment service is provided in response to the establishment of the wireless communication between electronic device 200 and vehicle 100, the vehicle user in vehicle 100 would be provided with convenience to directly pay a payment fee incurred during the period in which vehicle 100 was parked.

The payment fee may include, for example, a parking fee, a gas charging fee (cost of charging a battery of an electric vehicle if vehicle 100 is an electric vehicle), a car wash fee, and the like. The vehicle user who receives the payment service of the present disclosure does not have to use a payment station for paying a payment fee nor to pay a payment at a barrier gate when exiting from a parking lot.

The establishment of the wireless communication (hereinafter, referred to as payment trigger wireless communication) between electronic device 200 and vehicle 100 that enables vehicle to provide the payment service may be the connection of wireless communication itself or a signal exchanged to perform a specific function.

According to an embodiment, the payment trigger wireless communication may be first wireless communication (101 in **FIG. 1**) established by electronic device 200 with a communication circuit installed at door 130 of vehicle 100. In another embodiment, the payment trigger wireless communication may be at least one signal exchanged to confirm, from vehicle 100, whether electronic device 200 that has established first wireless communication 101 with vehicle 100 has the authority to control vehicle 100. In yet another embodiment, the payment trigger wireless communication may be at least one signal exchanged between vehicle 100 and electronic device 200 that has established first wireless communication 101 with vehicle 100 to unlock and lock door 130 of vehicle 100.

In another embodiment, the payment trigger wireless communication may be second wireless communication (102 in **FIG. 1**) established between electronic device 200 and vehicle 100. In yet another embodiment, the payment trigger wireless communication may be at least one signal exchanged to confirm, from vehicle 100, whether electronic device 200 that has established second wireless communication 102 with vehicle 100 has the authority to control vehicle 100. In still another embodiment, the payment trigger wireless communication may be a control signal exchanged between vehicle 100 and electronic device 200 that has established first wireless communication 101 with vehicle 100 to control vehicle 100. The control signal to control vehicle 100 includes various control signals to start the engine of vehicle 100, shift the gear of vehicle 100 and the like.

In still another embodiment, the payment trigger wireless communication may be second wireless communication 102 established after first wireless communication 101 is established between electronic device 200 and vehicle 100. For example, after first wireless communication 101 through which electronic device 200 is connected to the communication circuit installed at door 130 of vehicle 100 is established, each of vehicle 100 or electronic device 200 may request the establishment of second wireless communication 102 from each other, and second wireless communication 102 may be established based on this. Likewise, the payment trigger wireless communication may be at least one of signals exchanged through second wireless communication 102 that is established after first wireless communication 101 is established, as described above.

At a block S702, head unit 110 may check a payment initiation condition. Herein, the "payment initiation condition" refers to various conditions indicating an intention to make in-vehicle payment of a service fee incurred while vehicle 100 stays in a specific area.

According to an embodiment, head unit 110 may check the payment initiation condition when an engine start of the vehicle is detected after the engine is turned off. This is a case where the user of vehicle 100 stops the engine for parking, uses a service in a specific area and then restarts the engine to exit, which can be regarded as a payment initiation condition. Head unit 110 may receive information about vehicle driving from an ECU of vehicle 100 in order to detect stopping and starting of the engine. Head unit 110 may check the payment initiation condition when an engine start is detected after a lapse of a predetermined period of time after the engine is stopped. The predetermined time may be, for example, the minimum time for charging a parking fee. According to another embodiment, head unit 110 may check the payment initiation condition when a predetermined time elapses after an engine start is detected. This is because the reason for the restart may not be due to a true exit but may be a change of the parking posture/location of vehicle 100.

In some embodiments, head unit 110 may check the payment initiation condition in response to the user's input to an input device installed on vehicle 100. To illustrate this, reference will be made to **FIG. 8****.** For example, vehicle 100 may include a separate physical key (e.g., 810 in **FIG. 8**) for in-vehicle payment. Physical key 810 may include a push button or a dial key. Head unit 110 may detect the user's input to physical key 810 and check the payment initiation condition.

In another embodiment, head unit 110 may check the payment initiation condition in response to the user's input on an interface displayed on a display device (e.g., 820 in **FIG. 8**). Referring to **FIG. 8****,** vehicle 100 may include display device 820 capable of interacting with the user. Head unit 110 may display an interface for payment and an icon corresponding to the payment initiation condition through display device 820. When the user's input (*e.g.*, touch input) on the icon is received, head unit 110 may check the payment initiation condition.

In yet another embodiment, when electronic device 100 or a card type digital key (or smart key) is mounted on a pad (*e.g.*, 830 in **FIG. 8**), head unit 110 may consider it as the payment initiation condition. Pad 830 may be referred to as a wireless charging pad or an NFC card keypad.

In still another embodiment, vehicle 100 may check the payment initiation condition in response to the user's voice input to a microphone. For example, the head unit 110 may check the payment initiation condition when detecting receipt of a predetermined specific voice instruction (*e.g.*, the user's voice saying "in-vehicle payment").

When head unit 110 checks the payment initiation condition, head unit 110 may transmit a payment information request signal through a communication module. The payment information request signal may be transmitted to server 210 (*e.g.*, local server or central server) through a long-range wireless network.

Then, the process may continue to a block S703 where head unit 110 receives payment information and provides an interface for payment based on the received payment information. The payment information may be transmitted from server 210 in response to the payment information request signal transmitted by head unit 110. In another embodiment, the payment information may be transmitted from server 210 at regular intervals without a special request from head unit 110. The payment information represents information about the amount to be paid by the user corresponding to vehicle 100 (or vehicle license number). The user can use various services, for example, parking service, car wash service and shopping, in a specific area. That is, the payment information may include a parking fee in a specific area (*e.g.,* parking lot or gas station), a payment for items purchased in a specific area (*e.g.,* items purchased in a shopping mall or a market), a car wash service fee or an electric vehicle charging service fee. And the like. Also, the payment information may further include payment exemption information depending on the use of a discount coupon, a discount event or accumulated points.

According to an embodiment, head unit 110 may display an interface (821 in **FIG. 8**) for payment on a display device 360. Interface 821 may include an icon to receive an input about whether to proceed with in-vehicle payment. Interface 821 may display the amount of spending, the amount of discount and the final amount of payment.

According to an embodiment, interface 821 may further include an icon to select a driver who is the subject of payment. Head unit 110 may store a plurality of user information (or personalized profile). A process of registering the user information may further include a process of registering information, such as account information, card information and payment authority, necessary for payment as well as a synchronization process for electronic device 200 to serve as a digital key. The user information may be registered according to the user's input to display device 820 or may be registered from electronic device 200 of the user, and the user information may be stored in vehicle 100 (or head unit 110) through server 210.

In another embodiment, a driver who is the subject of payment may be determined through wireless communication between vehicle 100 and electronic device 200. Head unit 100 may receive user information to determine whether the user of electronic device 200 has the authority to control vehicle 100 when wireless communication is established between electronic device 200 and vehicle 100. In this case, head unit 100 may determine a driver who is the subject of payment based on the received user information.

In another embodiment, head unit 110 may provide an interface for payment in the form of a voice signal through a sound system. Head unit 110 may receive whether to proceed with in-vehicle payment in the form of a voice signal, an input to a physical button or the like. However, the embodiments are not limited thereto, and payment may be performed without displaying an interface asking the user whether to make payment depending on presetting. Also, head unit 110 may further provide an interface for checking whether payment information, e.g., final payment information, is correct.

The process may continue to a block S704 where head unit 110 may transmit the result of user's input about payment to server 210. Server 210 may perform payment based on the user information corresponding to vehicle 100 (or head unit 110) in response to the user's input result transmitted from head unit 110. In another embodiment, server 210 may transmit the result of user's input about payment directly to a vehicle access system. The process may be ended after head unit 110 transmits the result of user's input about payment to server 210.

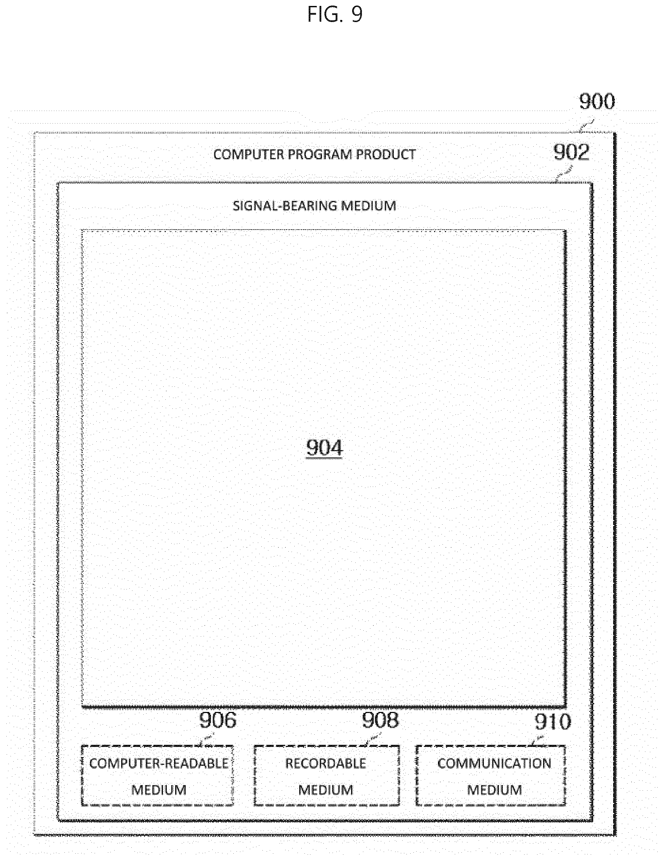

**FIG. 9** illustrates a computer program product that can be used to provide an electronic payment service by an electronic device serving as a digital key, in accordance an embodiment of the present disclosure. An illustrative embodiment of a computer program product is provided using a signal bearing medium 902. In some embodiments, one or more signal bearing mediums 902 of a computer program product 900 may include a computer-readable medium 906, a recordable medium 908 and/or a communication medium 910.

An instruction 904 included in signal bearing medium 902 may be executed by a computing device such as vehicle 100 (or head unit 110), electronic device 200 and at least one server 210 illustrated in **FIG. 1** to **FIG. 8****.** When executed, instruction 904 may cause the computing device to perform a process for providing a payment service for vehicle to a vehicle user. Instruction 904 may include at least one instruction related to all operations, such as various checks, analysis, storage, transmission and reception performed by vehicle 100, electronic device 200 and server 210 illustrated in **FIG. 1** to **FIG. 8**, for providing a payment service described in the present disclosure. For example, in an embodiment of the present disclosure, a computer program that is stored in a storage medium of an electronic device to provide a vehicle user with a payment service for vehicle and serve as a digital key and is executed by the electronic device may include instructions: to establish a communication connection with at least one communication circuit included as a digital key in a vehicle; to provide the payment service in response to the establishment of the communication connection with the vehicle; to check vehicle information of the vehicle in order to provide the payment service; to receive payment information of the vehicle from server 210 using the checked vehicle information; and to process payment based on the received payment information.

The above description of the present disclosure is provided for the purpose of illustration, and it would be understood by those skilled in the art that various changes and modifications may be made without changing technical conception and essential features of the present disclosure. For example, the specific area has been described above as a parking lot of a complex shopping mall, but the specific area may be a space, such as a concert hall, a drive-in theater, a festival site, in which a parking space is provided but it is difficult for the user to remember a parking location. It is clear that the above-described embodiments are illustrative in all aspects and do not limit the present disclosure. For example, each component described to be of a single type can be implemented in a distributed manner. Likewise, components described to be distributed can be implemented in a combined manner.

The claimed subject matter is not limited in scope to the particular implementations described herein. For example, some implementations may be in hardware, such as employed to operate on a device or combination of devices, for example, whereas other implementations may be in software and/or firmware. Likewise, although claimed subject matter is not limited in scope in this respect, some implementations may include one or more articles, such as a signal bearing medium, a storage medium and/or storage media. This storage media, such as CD-ROMs, computer disks, flash memory, or the like, for example, may have instructions stored thereon, that, when executed by a computing device, such as a computing system, computing platform, or other system, for example, may result in execution of a processor in accordance with the claimed subject matter, such as one of the implementations previously described, for example. As one possibility, a computing device may include one or more processing units or processors, one or more input/output devices, such as a display, a keyboard and/or a mouse, and one or more memories, such as static random access memory (SRAM), dynamic random access memory (DRAM), flash memory, and/or a hard drive.

There is little distinction left between hardware and software implementations of aspects of systems; the use of hardware or software is generally a design choice representing cost vs. efficiency tradeoffs. There are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution.

While certain example techniques have been described and shown herein using various methods and systems, it should be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter also may include all implementations falling within the scope of the appended claims, and equivalents thereof.

Throughout this document, the term "connected to" may be used to designate a connection or coupling of one element to another element and includes both an element being "directly connected to" another element and an element being "electronically connected to" another element via another element. Through the whole document, the term "on" that is used to designate a position of one element with respect to another element includes both a case that the one element is adjacent to the other element and a case that any other element exists between these two elements. Further, through the whole document, the term "comprises or includes" and/or "comprising or including" used in the document means that one or more other components, steps, operation and/or existence or addition of elements are not excluded in addition to the described components, steps, operation and/or elements unless context dictates otherwise. Through the whole document, the term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. A method performed on an electronic device to provide a payment service for vehicle and serve as a digital key, comprising:
establishing a communication connection with at least one communication circuit included as a digital key in a vehicle; and
providing the payment service in response to the establishment of the communication connection with the vehicle,
wherein the providing the payment service includes:
checking vehicle information of the vehicle;
receiving payment information of the vehicle from a server using the checked vehicle information; and
processing payment based on the received payment information.

2. The method of Claim 1,
wherein the communication connection between the electronic device and the vehicle is established by at least one of Near Field Communication (NFC) using an antenna installed at a door of the vehicle, beacon or RFID.

3. The method of Claim 1,
wherein the communication connection between the electronic device and the vehicle is established by at least one of Wi-Fi, Bluetooth or a manner using a communication network provided by a network provider.

4. The method of Claim 1,
wherein the providing of the payment service is initiated in response to transmission of a signal to unlock and lock a door of the vehicle or a signal to cause an engine of the vehicle to start through the connection with the vehicle.

5. The method of Claim 1, further comprising:
operating in a payment standby mode when it is determined that the vehicle is located within a specific area for a predetermined time or longer.

6. The method of Claim 1,
wherein the providing of the payment service includes providing a push notification in response to the connection with the vehicle and is initiated according to a user's input in response to the push notification.

7. The method of Claim 1, further comprising:
transmitting a signal to notify the server of payment completion when the payment is processed.

8. The method of Claim 1, further comprising:
acquiring authority to detect the connection with the vehicle or acquire the vehicle information.

9. An electronic device to provide a payment service for vehicle and serve as a digital key, comprising:
at least one communication circuit capable of communicating with a vehicle or at least one server;
a processor operatively connected to the communication circuit; and
a memory operatively connected to the processor,
wherein the memory stores instructions, when executed, to cause the processor:
to establish a communication connection with the at least one communication circuit as a digital key;
to provide the payment service in response to the establishment of the communication connection with the vehicle;
to check vehicle information of the vehicle in order to provide the payment service;
to receive payment information of the vehicle from the server using the checked vehicle information; and
to process payment based on the received payment information.

10. The electronic device of Claim 9,
wherein the communication connection between the electronic device and the vehicle is established by at least one of Near Field Communication (NFC) using an antenna installed at a door of the vehicle, beacon or RFID.

11. The electronic device of Claim 9,
wherein the communication connection between the electronic device and the vehicle is established by at least one of Wi-Fi, Bluetooth or a manner using a communication network provided by a network provider.

12. The electronic device of Claim 9,
wherein the memory further stores instructions, when executed, to cause the processor:
to provide the payment service in response to transmission of a signal to unlock and lock a door of the vehicle or a signal to cause an engine of the vehicle to start through the connection with the vehicle.

13. The electronic device of Claim 9,
wherein the memory further stores instructions, when executed, to cause the processor:
to operate in a payment standby mode when it is determined that the vehicle is located within a specific area for a predetermined time or longer.

14. The electronic device of Claim 9,
wherein the memory further stores instructions, when executed, to cause the processor:
to provide a push notification in response to the connection with the vehicle and provide the payment service according to a user's input in response to the push notification.

15. The electronic device of Claim 9,
wherein the memory further stores instructions, when executed, to cause the processor:
to transmit a signal to notify the server of payment completion when the payment is processed.

16. The electronic device of Claim 9,
wherein the memory further stores instructions, when executed, to cause the processor:
to acquire authority to detect the connection with the vehicle or acquire the vehicle information.

17. A computer program that is stored in a storage medium of an electronic device to provide a vehicle user with a payment service for vehicle and serve as a digital key and is executed by the electronic device, comprising:
instructions:
to establish a communication connection with at least one communication circuit included as a digital key in a vehicle;
to provide the payment service in response to the establishment of the communication connection with the vehicle;
to check vehicle information of the vehicle in order to provide the payment service;
to receive payment information of the vehicle from a server using the checked vehicle information; and
to process payment based on the received payment information.
